# EUROPEAN PATENT APPLICATION

(11) **EP 1 574 898 A1**
(43) Date of publication of application: **14.09.2005**
(21) Application number: 04425165.0
(22) Date of filing: 12.03.2004
(51) Int. Cl.: G03B 23/12

(54) **A projector for films**

(71) Applicant: D.T.S. Illuminazione S.r.l., 47843 Misano Adriatico (Rimini) (IT)
(72) Inventor: Gabrielli, Andrea, 47900 Rimini (IT)
(74) Representative: Lanzoni, Luciano

(57) **Abstract**

A projector for films comprises a containment body (2), at least a light source (3) engaged in the containment body (2) to emit a light beam, and at least a projection optics (4) engaged to the containment body (2) to focus the light beam and to define, in combination with said at least one light source (3), an axis of projection (X). The projection (1) further comprises a support and drive assembly (5) positioned between the light source (3) and the optics (4) to expose a film (6) to the light beam, and rotatably engaged in the containment body (2) to rotate the film (6) in a plane that is perpendicular to the axis of projection (X).

## Description

The present invention relates to a projector for films, in particular a multi-vision projector for films.

This type of projector is usually employed in shows where a succession of fixed images of various kinds is reproduced on large surfaces.

Generally, such surfaces are large screens but they can also be integral parts of architectural structures, for example façades of buildings or cathedrals, and they have more or less accentuated irregularities.

Known projectors are able to project, following a pre-set time sequence, a succession of different images on a same surface, which may have several irregularities. Such projectors may also automatically focus the projected image.

To project an images, prior art projectors are equipped with a light source, provided with one or more lighting bodies and possibly of optics for concentrating the beam, downstream of which, on the optical axis of the system, is located an assembly for supporting and driving the film.

The support and driving assembly is structure in such a way that the frame to be projected is centred on the optical axis in a plane of lay that is perpendicular to the optical axis.

Downstream of the support and driving assembly, there is a projection optics which projects the image at a distance.

It is known that, in order to project an image on a surface correctly, the polygon, usually a rectangle, which delimits the image must overlap as faithfully as possible the perimeter of the projection surface; in particular, the horizontal axis of the image must correspond with the horizontal axis of the projection surface.

To project an image in the most correct manner possible, in the sense described above, prior art projectors are generally positioned one adjustable support structures, such as tripods in which the extension of the tripod legs can be adjusted, or adjustable feet screwed under the base of the projector in which a differentiated extension of the feet is possible.

During a same image projection show, it is often necessary to replace the film being projected in order to project an additional sequence of images.

In prior art projectors, the replacement of the film, which is similar to film for slides but comprises a single strip where all slides are present, is accomplished by accessing, through a door provided on the projector, to the fixed film support reels inside the projector, removing from said reels the film that has just been projected and mounting a new film on the reels.

Alternatively, the entire front part of the projector, comprising the projection optics and the film support reels, is opened in book fashion with respect to the rear part of the projector or is fully uncoupled therefrom, uncovering the reels and allowing the replacement of the film according to the same procedure described above.

Moreover, during a same show, it occasionally becomes necessary to project an image, contained in the film being projected, that is not contained in the frame following or preceding the one being projected.

In prior art projectors, this requirement is met by re-projecting in very rapid sequence all the frames of the film until the frame containing the sought image is found.

The Applicant has observed that prior art film projectors can be improved under several aspects.

With prior art projectors, it is not always possible to align the horizontal axis of the image with the horizontal axis of the projection surface.

This drawback stems from the fact that, acting on the inclination of the projector relative to the horizon, by adjusting its support structure, the axis of projection undergoes a drift which forces the realignment of the axis of projection itself (which must be perpendicular to the projection surface). However, the latter adjustment entails a loss of alignment between the horizontal axis of the image and the horizontal axis of the projection surface.

It is readily apparent that the alignment procedure described above is an iterative procedure that does not always converge to the sought solution and that anyway, in the best case, requires a very long time.

The alignment procedure described above is nearly impossible when it is necessary to project an image, during the same projection, on a different projection surface from the initial one.

Moreover, when it becomes necessary to change the film during a same projection, prior art projectors must be partially disassembled or otherwise opened and the film contained therein must be completely removed from the support reels to make room for another film, requiring a non negligible idle time within a show.

Lastly, prior art projectors require a very long time for the search of a non consecutive or prior frame to the one currently projected.

Within this context, the specific task of the present invention is to propose a projector for films that allows to overcome the aforementioned drawbacks.

In particular, an object of the present invention is to make available a projector that allows to align the horizontal axis of the projected image with respect to the horizontal axis of the projection surface in a simple and quick manner and without losing the perpendicularity between axis of projection and projection surface.

An additional object of the present invention is to propose a projector for films that allows to replace the film in a time interval that is negligible within the context of a show.

Yet another object of the present invention is to make available a projector for films that allows immediately to search and project any frame within a film.

The specified technical task and the aims set out above are substantially achieved by a projector for films comprising the technical characteristics described in one or more of the appended claims.

Additional aims, characteristics and advantages of the present invention shall become readily apparent from the indicative, and thus non limiting, description of a preferred but not exclusive embodiment of a projector for films, as illustrated in the accompanying drawings, in which:
- Figure 1 is a lateral view of a projector according to the present invention,
- Figure 2 is a front view of the projector of Figure 1,
- Figure 3 shows a lateral sectioned view of the projector of Figure 1 according to the plane III-III with some parts removed the better to highlight other parts;
- Figure 4 is a perspective view of a detail of the projector of Figure 3,
- Figure 5 is a perspective view according to the section V-V of the detail of Figure 4;
- Figure 6 is a lateral sectioned view of a detail of Figure 3 according to the plane III-III.

With reference to the figures, a projector for films has globally been designated by the reference number 1.

The projector for films 1 comprises a containment body 2 in which is fastened at least one light source 3. The light source 3, provided with one or more lighting bodies, is able to emit a light beam which is directed, for example through appropriate concentrating optics, towards at least a projection optics 4. The projection optics 4 is fastened to the containment body 2 of the projector 1 and it serves the purpose of focusing the light beam onto a projection surface.

The light source 3 and the projection optics 4 define a determined optical path for the light beam which hereafter shall be identified as axis of projection X. The projector 1 comprises, within the containment body 2 between the light source 3 and the projection optics 4, a support and drive assembly 5 which supports a film 6 exposing it to the light beam produced by the light source 3. In particular, the support and drive assembly 5 exposes the film 6 perpendicularly to the light beam.

The projector 1 also comprises a support structure 7 which is rotatably engaged to the containment body 2 to support said body in elevation relative to the ground and to rotate it around the two mutually orthogonal axes Y, Z, whereof at least one Z is perpendicular to the axis of projection X.

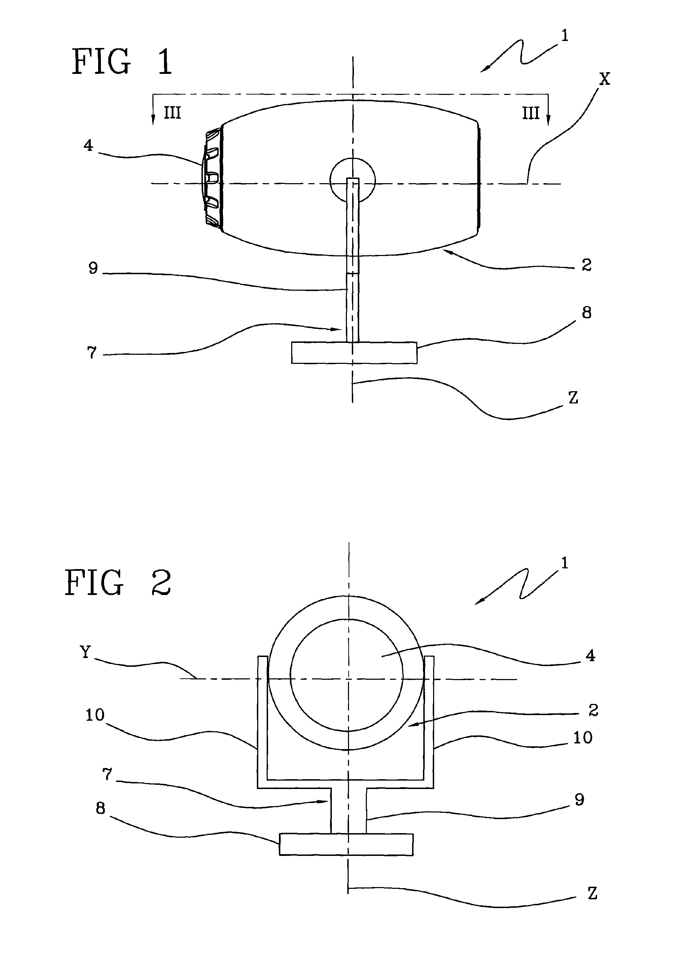

As shown in Figures 1 and 2, the support structure 7 comprises a pedestal 8, destined to come in contact with the ground, whereto is rotatably engaged a stem 9 which develops approaching the containment body 2 in a direction coinciding with the axis Z perpendicular to the axis of projection X.

In proximity to the containment body 2, the stem 9 has a bifurcation to define two tines 10 which are hinged, in their free ends, to the containment body 2.

The rotatable coupling between stem 9 and pedestal 8 defines the axis Z of rotation perpendicular to the axis of projection X, whilst the rotatable coupling between the tines 10 and the containment body 2 defines the axis Y of rotation perpendicular to the axis Z perpendicular to the axis of projection X.

Advantageously, the support and drive assembly 5 is rotatably engaged within the containment body 2 to be able to rotate the film 6 at least in a plane that is perpendicular to the axis of projection X.

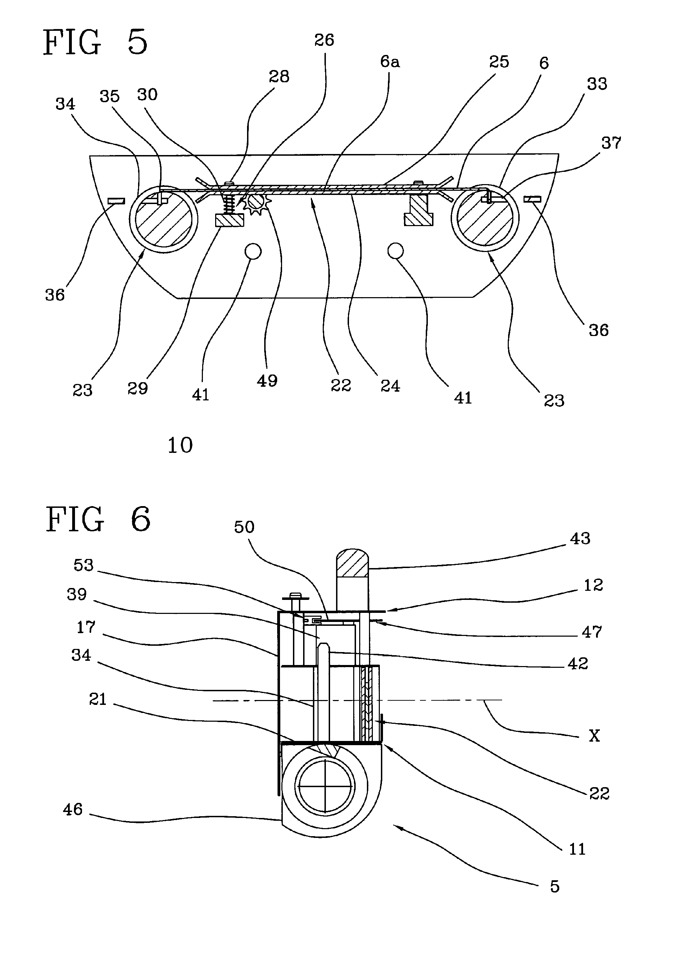

More in detail, the support assembly 5 comprises a cradle 11 and view pass assembly 12, as shown in Figure 6.

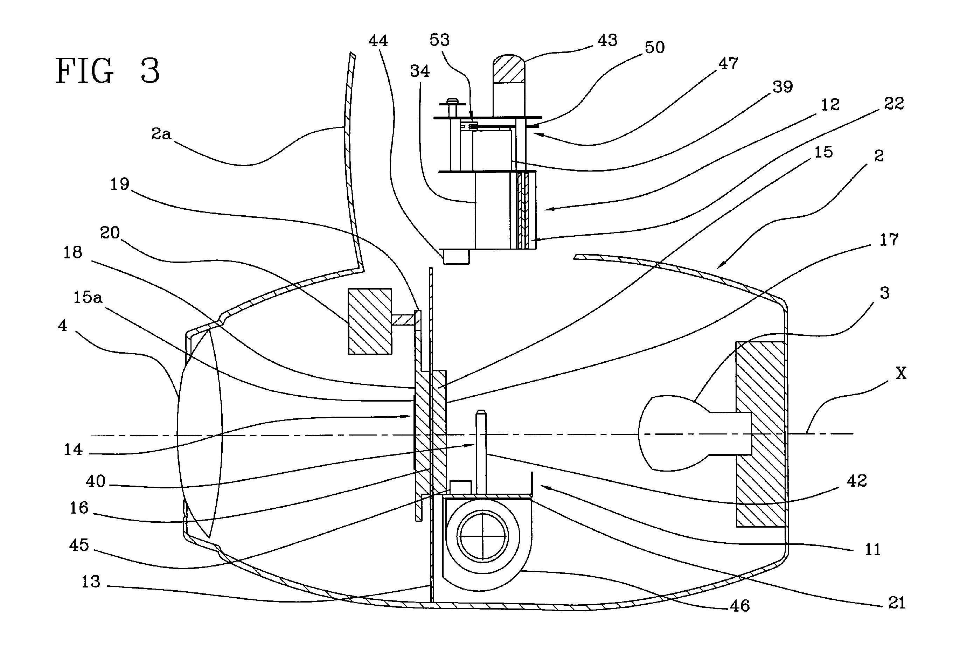

As Figure 3 shows, the cradle 11 is rotatably engaged inside the containment body 2 and has an axis of rotation, with respect to the containment body 2, coinciding with the axis of projection X. The rotatable engagement between cradle 11 and containment body 2 is accomplished by an appendage 13, internal to the containment body 2, which develops perpendicularly to the axis of projection X and has a hole able to be engaged by at least a transmission member 14 of the cradle 11. In particular the transmission member 14 comprises two opposite ends 15, 15a, joined by a substantially cylindrical central element 16. The diameter of said central elements substantially corresponds to the diameter of the hole of the appendage 13 and is inserted into the hole itself. One of the two opposite ends 15 of the transmission member 14 is directly fastened to a first wall 17, perpendicular to the axis of projection X, of the cradle 11, whilst the opposite end 15a has a gear wheel 18 able to be connected, by meshing with a gear wheel 19 of an electric motor 20, with the electric motor 20 itself. Alternatively, and end 15a of the transmission member 14 has a first pulley which is engaged through a transmission belt with a second pulley connected to the electric motor 20.

Moreover, the cradle 11 has a second wall 21, substantially perpendicular to the first 17 to receive and sustain the view pass assembly 12.

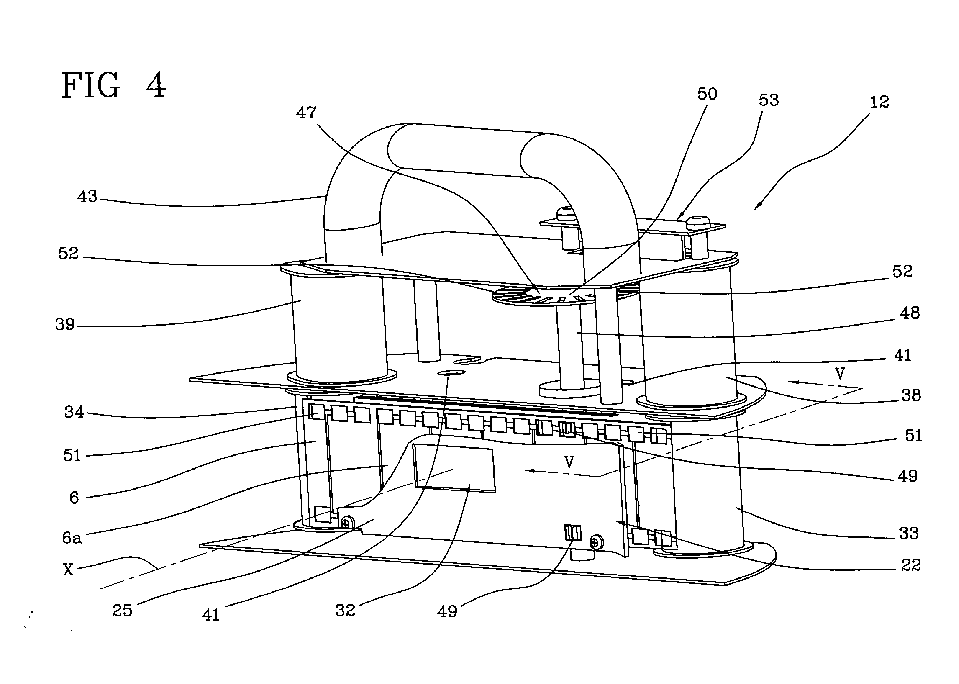

As shown in Figures 4 and 5, the view pass assembly 12 comprises presser means 22 to receive and engage a portion 6a of the film 6 in front of the light beam enveloping at least partially the portion 6a of film 6, the presser means 22 are able to position at least one frame, of the portion 6a of film 6 being engaged, orthogonally to the axis of projection X.

In detail, the presser means 22 comprise a first plate-like element 24 which is superposed to a second plate-like element 25 and elastic pressing means 26 operatively active on at least one between the first 24 and the second 25 plate-like element.

The elastic means 26 press a plate-like element 24 to approach it towards the other plate-like element 25, integral with the view pass assembly 12, thereby stretching the portion 6a of film 6 engaged between the two plate-like elements.

In the preferred embodiment, the elastic means 26 comprise at least one pivot 27, which slidably engages two mutually opposite holes obtained in the plate-like elements 24, 25, and which has a head 28 destined to enter in abutment with the plate-like element 25 integral with the view-pass assembly 12. At the opposite side from the head 28, the pivot 27 has a threaded portion screwed in a nut 29.

Advantageously, between the nut 29 and the plate-like element 24 not engaged by the head 28 of the pivot 27, acts a spring 30 provided with a calibrated preload to thrust said plate-like element 24 against the other plate-like element 25 without excessively crushing the portion 6a of film 6 engaged between the two plate-like elements 24, 25.

Moreover, both plate-like elements 24, 25 have respective flared end portions 24a, 2 5a to define two inviting sections for the portion 6a of film 6 engaged between the two plate-like elements 24, 25.

Advantageously, the first 24 and the second plate-like element 25 completely envelop the engaged portion 6a of film 6 and respectively comprise a first and a second perpendicular openings (only the second opening is shown in the figures and is designated by the number 32), traversed by the axis of projection X, and with their size at least equal to the size of a single frame of the film 6.

The view pass assembly 12 further comprises unwinding means 23 to feed successive portions of film 6 to the presser means 22.

In particular, the unwinding means 23 comprise a first reel 33 and a second reel 34 positioned at opposite sides with respect to the presser means 22 to engage and drive the film 6.

Each of the two reels 33, 34 comprises a groove 35 into which is engaged a respective end of the film 6 and a screw 36 which is inserted until it disappears in a dead hole 37 communicating with the groove 35 of the reel to secure the end of the film 6 to the reel itself.

Advantageously, both the first and the second reel 33, 34 are operatively connected to respective electric motor 38, 38, which are selectively activated by a switch.

More in particular, when one 38 of the two electric motors 38, 39 is activated and sets in rotation the corresponding reel 33 to wind thereon the film 6, i.e. when the reel 33 in question is a collecting reel, the other reel 34 is idle, i.e. it is a yielding reel, and it is driven in rotation by the reel 6 itself.

Similarly, to reverse the direction of winding of the reel 6, i.e. to make the initially collecting reel 33 into a yielding reel and to make the initially yielding reel 34 into a collecting reel, the switch activates the initially inactive electric motor 39 and deactivates the initially active electric motor 39.

Advantageously, the support and drive assembly 5 comprises disengageable coupling means 40 operatively active between the cradle 11 and the view pass assembly 12, for example of the type with bayonet coupling or snap-on coupling and possibly having coupling elements that can be permanently operated while transporting the projector.

In the preferred embodiment, the disengageable coupling means 40 comprise at least a hole 41 obtained in the view pass assembly 12 and at least a guide rod 42, integral with the cradle 11 and able to be inserted into the hole 41.

Preferably, there are two holes 41 in the view pass assembly 12 and two guide rods 42, which develop starting from the second wall 21 of the cradle 11 along a direction that is substantially perpendicular to the axis of projection X.

The view pass assembly 12 is thus completely separable from the cradle 11 and, in combination with a door 2a obtained in the containment body 2 at the support and drive assembly 5, can be extracted from the projector.

The operation is facilitated by a handle 43 located on the view pass assembly 12. Moreover, view pass assembly 12 and the cradle 11 comprise respective complementary electrical connectors 44, 45 that are joined when the view pass 12 is inserted on the cradle 11, providing the electrical power supply of the view pass assembly 12.

To the second wall 21 of three cradle 11 is connected a fan 46, preferably centrifugal, which impacts with a flow of cooling air the film 6 when the view pass assembly 12 is inserted on the cradle 11 and the projector is operating.

Advantageously, the support and drive assembly 5 comprises an encoder 47, preferably integral to the view pass assembly 12, operatively associated to the film 6 to determine unambiguously the relative position of a current frame, i.e. a frame being projected, of the film 6 with respect to the film 6 itself.

The encoder 47 comprise a transmission shaft 48 having at least a gear wheel 49 positioned at a first end thereof and an encoding disk positioned at the second end of the transmission shaft 48.

The gear wheel 49 engages a row of equidistant holes 51 on the film 6, driving in rotation the transmission shaft 48.

If the film 6 used for the projections has two parallel rows of holes 51, two gear wheels 49 are used, each of which is engaged in a respective row of holes.

Moreover, the gear wheels 49 engage the film 6 in the immediate vicinity of the openings of the plate-like elements 24, 25, to minimise possible relative sliding between film 6 and gear wheels 49, and holes 24b, 25b are provided in the plate-like elements 24, 25 to allow the passage of the gear wheels 49.

The rotation of the transmission shaft 48 is transmitted to the encoding disk 50, which, being integral with the transmission shaft 48, is set in rotation. In this way, to each complete turn of the gear wheel 49 corresponds a complete turn of the encoding disk 50.

The encoding disk 50 comprises a plurality of openings 52, i.e. of through holes, positioned peripherally and at constant angular distances; in the preferred embodiment the openings 52 are at least 200.

Moreover, to each complete turn of the encoding disk 50 exactly corresponds the advance of one frame of the film 6.

On the support and drive assembly 5, preferably on the view pass assembly 12, are present sensing means 53 to decode signals coming from the encoding disk.

In detail, the sensing means 53 comprise a source of electromagnetic radiation, preferably in the near infrared range, directly facing the openings 52 of the encoding disk 50 and a receiver of electromagnetic waves reflected by the encoding disk 50.

The receiver of reflected electromagnetic waves is operatively connected with a counter, capable unambiguously to determine the number of openings 52 of the encoding disk 50 that pass in front of the receiver. It is thereby possible to establish the number of turns the encoding disk has completed from the start of the reproduction of the film and, by relating the number of teeth of the gear wheel 49 of the encoder 47 with the number of holes 51 present at each frame, it is possible unambiguously to establish the relative position of the current frame within the film being projected.

Moreover, on the film 6 can be inserted a film start mark which, detected by a reader, serves to set the counter to zero.

Advantageously, the counter is connected to a command and control unit able to determine the direction of rotation of the encoder 47.

The command and control unit, moreover, is connected with the electric motor 20 which commands the rotation of the cradle 11, to the electric motors 38, 39 of the reels 33, 34, to the projection optics 4 and to the light source 3.

The present invention achieves the proposed objects.

The support assembly rotatably engaged within the containment body of the projector allows to align the horizontal axis of the image to the horizontal axis of the projection surface without acting on the inclination relative to the horizon of the projector, thereby assuring that the axis of projection remains perpendicular to the projection surface.

Moreover, the view pass assembly, comprising both the winding reel and the film and being extractable from the projector, allows a rapid replacement of the film, since it is sufficient to extract to view pass assembly and to insert another view pass assembly whereon a new film has already been mounted.

Lastly, the encoder operatively active on the film allows, knowing the exact sequence of all the frames contained in the film, an immediate positioning along the axis of projection of a predetermined frame.

The invention also allows to achieve important advantages.

The encoder, which acts in a position in which the film is completely stretched and has no slack, allows to reduce to zero any error due to the relative sliding between the holes of the film and encoding disk, assuring that the frame identified during the search is positioned in perfectly centred manner relative to the axis of projection and hence projected correctly.

Moreover, it is possible to project images contained in common positive developed films provided with equidistant holes, such as those present on the most widely used films for photographic camera, with no need to transfer the images to be projected on particular films, which are usually rather costly.

## Claims

1. Projector for films comprising a containment body (2), at least a light source (3) fastened in said containment body (2) to emit a light beam, at least a projection optics (4) fastened to said containment body (2) to focus said light beam and to define, in combination with said at least one light source (3), an axis of projection (X), a support and drive assembly (5) positioned between said at least one light source (3) and said at least one optics (4) to expose a film (6) to said light beam; the projector being **characterised in that** said support and drive assembly (5) is rotatably engaged in said containment assembly (2) to rotate said film (6) at least in a plane that is perpendicular to said axis of projection (X).

2. A projector as claimed in claim 1, further comprising a support structure (7) rotatably engaged to said containment body (2) to support said containment body (2) and to rotate it around two mutually perpendicular axes (Y, Z), at least one axis (Z) of said two mutually perpendicular axes (Y, Z) being perpendicular to said axis of projection (X).

3. A projector as claimed in claim 1 or 2 wherein said support and drive assembly (5) comprises a cradle (11) that is rotatably engaged to the containment body (2) and has an axis of rotation coinciding with said axis of projection (X), and a view pass assembly (12) coupled with said cradle (11) to support and drive said film (6).

4. A projector as claimed in claim 3 wherein said cradle (11) comprises at least a transmission member (14) operatively connected to an electric motor (20).

5. A projector as claimed in claims 3 or 4 wherein said cradle (11) comprises a fan (46) operatively active at said film (6) to cool said film (6).

6. A projector as claimed in claims 3 to 5 wherein said view pass assembly (12) comprises presser means (22) to house and engage a portion (6a) of the film (6) in front of said light beam and unwinding means (23) to feed successive portions of film (6) to said presser means (22); said presser means (22) enveloping at least partially the engaged portion (6a) of film (6).

7. A projector as claimed in claim 6 wherein said presser means (22) comprise a first plate-like element (24), a second plate-like element (25), integral with said view pass assembly (12) and superposed on the first plate-like element (24), and elastic pressing means (26) operatively active on at least one between said first plate-like element (24) and second plate-like element (25) to stretch the portion (6a) of film (6) engaged between the first (24) and the second (25) plate-like element.

8. A projector as claimed in claim 6 or 7 wherein said first plate-like element (24) and second plate-like element (25) completely envelop said engaged portion (6a) of film (6) and respectively comprise a first and a second opening (32), perpendicular and traversed by said axis of projection (X).

9. A projector as claimed in claims 6 through 9 wherein said unwinding means (23) comprise a first reel (33) and a second reel (34), positioned at opposite sides with respect to the presser means (22) to engage and drive said film (6), and a switch operatively active on said first (33) and second (34) reel in order selectively to connect said first reel (33) and second reel (34) to a respective electric motor (38, 39).

10. A projector as claimed in claims 3 through 9 wherein said containment body (2) comprises a door (2a) positioned at said support and drive assembly (5); said support and drive assembly (5) comprising disengageable coupling means (40) operatively active between said cradle (11) and said view pass assembly (12) to extract said view pass assembly (12) from said containment assembly (2).

11. A projector as claimed in claim 10 wherein said disengageable coupling means (40) comprise at least a hole (41) obtained in said view pass assembly (12) and at least a guide rod (42) integral with said cradle (11) to engage said hole (41).

12. A projector as claimed in claims 1 through 11 wherein said support and drive assembly (5) comprises an encoder (47) operatively associated to said film (6) in order unambiguously to determine the relative position of a current frame of the film (6).

13. A projector as claimed in claim 12 wherein said encoder (47) comprises a transmission shaft (48), at least a gear wheel (49) positioned at a first end of said shaft (48) to engage, in proximity to said axis of projection (X), with equidistant holes (51) of the film (6), an encoding disk (50) positioned at a second end of said shaft (48) and sensing means (53) directly facing said encoder disk (50) to decode signals coming from said encoder disk (50).

14. A projector as claimed in claim 13, wherein said encoding disk (50) comprises a plurality of openings (52) positioned peripherally to the encoding disk (50) and at constant angular distances.

15. A projector as claimed in claim 14 wherein said sensing means (53) comprise a source of electromagnetic radiation facing said encoding disk (50), a receiver of electromagnetic waves reflected by the encoding disk (50) and a counter, associated to said receiver, to determine the number of openings (52) in the encoding disk (50) sensed by the receiver.

16. A projector as claimed in any of the previous claims comprising a command and control unit operatively connected at least to said support and drive assembly (5), to said at least one light source (2) and to said at least one optics (4).

17. A support and drive assembly for projectors comprises a view pass assembly (12) to support and drive a film (6) and a cradle (11) capable of being integrally fastened in a projector to support said view pass assembly (12), **characterised in that** it comprises disengageable coupling means (40) active between said view pass assembly (12) and said cradle (11).

18. A support and drive assembly as claimed in claim 17 wherein said disengageable coupling means (40) comprise at least a hole (41) obtained in s aid view p ass assembly (12) and at least a guide r od (42) integral with said cradle (11) to engage said hole (41).

19. A support and drive assembly as claimed in claim 17 or 18 wherein said cradle (11) comprises a fan (46) operatively active at said film (6) to cool said film (6).

20. A support and drive assembly as claimed in claims 17 through 19 wherein said view pass assembly (12) comprises presser means (22) to house and engage a portion (6a) of the film (6) and unwinding means (23) to feed successive portions of film (6) to said presser means (22); said presser means (22) enveloping at least partially the engaged portion (6a) of film (6).

21. A support and drive assembly as claimed in claim 20 wherein said presser means (22) comprise a first plate-like element (24), a second plate-like element (25), integral with said view pass assembly (12) and superposed to the first plate-like element (24), and elastic pressing means (26) operatively active on at least one between said first plate-like element (24) and second plate-like element (25) to stretch the engaged portion (6a) of film (6) between the first (24) and the second plate-like element (25).

22. A support and drive assembly as claimed in claim 21 said first plate-like element (24) and second plate-like element (25) completely envelop said engaged portion (6a) of film (6) and respectively comprise a first and a second opening (32) positioned at least a frame of said engaged portion of film (6a).

23. A support and drive assembly as claimed in clams 20 through 22 wherein said unwinding means (23) comprise a first reel (33) and a second reel (34), positioned at opposite sides with respect to the presser means (22) to engage and drive said film (6) and a switch operatively active on said first (33) and second (34) reel in order selectively to connect said first reel (33) and second reel (34) to a respective electric motor (38, 39).

24. A support and drive assembly as claimed in claims 17 through 23 comprising an encoder (47) operatively associated to said film (6) in order unambiguously to determine the relative position of a current frame of the film (6).

25. A support and drive assembly as claimed in claim 24 wherein said encoder (47) comprises a drive shaft (48), at least a gear wheel (49) positioned to a first end of said shaft (48) to engage, in proximity to the current frame, with equidistant holes (51) of the film (6), an encoding disk (50) positioned at a second end of said shaft (48) and sensing means (53) directly facing said encoding disk (50) to decode signals coming from said encoding disk (50).

26. A support and drive assembly as claimed in claim 25 wherein said encoding disk (50) comprises a plurality of opening (52) positioned peripherally to the encoding disk (50) and at constant angular distances.

27. A support and drive assembly as claimed in claim 26 wherein said sensing means (53) comprise a source of electromagnetic radiation facing said encoding disk (50), a receiver of electromagnetic waves reflected by the encoding disk (50) and a counter, associated to said receiver, to determine the number of openings (52) in the encoding disk (50) sensed by the receiver.

28. A support and drive assembly as claimed in claims 24 through 27 comprising a command and control unit operatively connected at least to said cradle (11), to said view pass assembly (12) and to said encoder (47).

29. A projector for films comprising a containment body (2), at least a light source (3) engaged in said containment body (2) to emit a light beam, at least a projection optics (4) engaged to said containment body (2) to focus said light beams and to define, in combination with said at least one light source (3), an axis of projection (X), a support and drive assembly (5) positioned between said at least one light source (3) and said at least one optics (4) to expose a film (6) to said light beam; the projector being **characterised in that** it comprises an encoder (49) comprising a transmission shaft (48), at least a gear wheel (49) positioned at a first end of said shaft (48) to engage, in proximity with a frame being projected, with equidistant holes (51) of the film (6), an encoding disk (50) positioned at a second end of said shaft (48) and sensing means (53) directly facing said encoding disk (50) to decode signals coming from said encoding disk (50).

30. A projector as claimed in claim 29 wherein said encoding disk (50) comprises a plurality of openings (52) positioned peripherally positioned to the encoding disk (50) and at constant angular distances.

31. A projector as claimed in claim 30 wherein said sensing means (53) comprises a source of electromagnetic radiation facing said encoding disk (50), a receiver of electromagnetic waves reflected by the encoding disk (50) and a counter, associated to said receiver, to determine the number of openings (52) in the encoding disk (50) sensed by the receiver.

32. A projector as claimed in claims 29 through 31 comprising a command and control unit operatively connected to said sensing means (53).

33. A projector for films comprising a containment body (2), at least a light source (3) engaged in said containment body (2) to emit a light beam, at least a projection optics (4) engaged to said containment body (2) to focus said light beam and to define, in combination with said at least one light source (3), an axis of projection (X); the projector being **characterised in that** it comprises a support and drive assembly as claimed in one or more of the claims from 17 through 28.
